# EUROPÄISCHE PATENTSCHRIFT

(11) **EP 1 830 178 B1**
(45) Veröffentlichungstag und Bekanntmachung des Hinweises auf die Patenterteilung: **09.09.2009**
(21) Anmeldenummer: 07002821.2
(22) Anmeldetag: 09.02.2007
(51) Int. Cl.: G01N 21/88, F21S 2/00, G02B 7/00

(54) **Vorrichtung zur Emission von linienartigem Licht**
Device for emitting linear light
Dispositif destiné à l'émission d'une lumière linéaire

(30) Priorität: 01.03.2006 DE 102006009444
(43) Veröffentlichungstag der Anmeldung: 05.09.2007
(73) Patentinhaber: Texmag GmbH Vertriebsgesellschaft, 8800 Thalwil (CH)
(72) Erfinder: Palatzky, Roland, 86356 Neusäß (DE); Struschek, Robert, 86916 Kaufering (DE)
(74) Vertreter: Peterreins, Frank

(56) Entgegenhaltungen:
- EP-A2- 0 272 681
- WO-A-20/04006560
- DE-A1- 3 709 500
- DE-U1- 20 319 640
- US-A- 3 654 471
- US-A1- 2002 114 155

## Beschreibung

Die vorliegende Erfindung betrifft eine Vorrichtung zur Emission von Licht, welche linienartig angeordnete Einrichtungen zur Abstrahlung von Licht aufweist. Die vorliegende Erfindung betrifft außerdem eine Messanordnung mit einer derartigen Vorrichtung zur Emission von Licht und einer oder mehreren Kameras sowie ein System zur Erfassung und Vermessung der Kanten oder zur Detektierung von Fehlern und/oder Unregelmäßigkeiten einer Materialbahn, die entlang einer Messebene vorbeigeführt wird.

Im Stand der Technik sind Systeme zur Detektierung von Fehlern und/oder Unregelmäßigkeiten auf einer Materialbahn, die entlang einer Messebene vorbeigeführt wird, bekannt, die eine Vorrichtung zur Emission von linienartigem Licht aufweisen. Mit linienartigem Licht wird dabei gebündeltes Licht verstanden, das auf der Materialbahn eine bestrahlte Linie erzeugt, die meist quer zur Materialbahn verläuft. Mit einem derartigen System kann beispielsweise eine Papierbahn, die mit hoher Geschwindigkeit entlang der Messebene vorbeigeführt wird, untersucht werden, wobei vorzugsweise eine oder mehrere Zeilenkameras verwendet werden, um durch die Detektierung von Helligkeitsunterschieden auf der Materialbahn im Auflicht- oder Durchlichtverfahren die Bahnkanten oder Fehler und/oder Unregelmäßigkeiten (z.B. Dünnstellen, Einschlüsse von Fliegen oder Schmutzpartikeln, etc.) festzustellen. Im Auflichtverfahren sind dabei sowohl die Emissionsvorrichtung als auch die Kamera auf derselben Seite von der Materialbahn angeordnet, und im Durchlichtverfahren auf unterschiedlichen Seiten von der Materialbahn.

Vorrichtungen zur Emission von linienartigem Licht sind beispielsweise aus der WO 2004/006560 und aus der US 6,880,952 B2 bekannt.

U.S. 3,654,471 offenbart eine Vorrichtung zur Reflektierung elektromagnetischer Wellen von einer länglichen Strahlenquelle, umfassend ein Halteprofil mit einer Aushöhlung zur Aufnahme eines reflektierenden Metallstreifens.

EP 0272681 A2 offenbart eine Systemleuchte, die sich dadurch auszeichnet, dass das Trägerprofil einen flachgestreckten, beidseitig spitzwinklig endenden Querschnitt besitzt und alle Funktionselemente in dem die stets größte Höhenabmessung aufweisenden Mittelteil konzentriert werden. Änderungen der Abmessungen führen aufgrund der gewählten Formgestaltung zu keiner wesentlichen Änderung des äußeren Erscheinungsbildes, so dass auch leistungsstarke Systeme bei gleicher Formgebung ohne Beeinträchtigung des Erscheinungsbildes realisierbar sind

DE 203 19 640 U1 offenbart eine LED-Lampenröhre bzw. eine energiesparende LED-Lampenröhre mit langer Lebensdauer, die eine speziell entworfene röhrenförmige, lichtdurchlässige Lichtführungsabschirmung und ein LED-Modul, das in der Lichtführungsabschirmung montiert ist und durch eine programmierbare Steuereinheit gesteuert wird, um eine bestimmte Beleuchtungswirkung zu erzielen, umfasst.

US 2002/114155 A1 offenbart ein Beleuchtungssystem, das den Aufwand für die notwendige Verkabelung deutlich reduziert und so weite Bereiche bei minimierten Kostensteigerungen beleuchtet werden können, und das für eine Nutzung unter beschränkten Platzverhältnissen geeignet ist.

Die Aufgabe der vorliegenden Erfindung ist es, eine Vorrichtung zur Emission von linienartigem Licht bzw. eine Messanordnung zu schaffen, die eine kompakte und robuste Bauweise hat. Außerdem sollen mit einer Vorrichtung möglichst viele Beleuchtungsvarianten ermöglicht werden.

Die Aufgabe wird durch eine Vorrichtung gemäß Anspruch 1 gelöst. Die abhängigen Ansprüche enthalten vorteilhafte Ausgestaltungen der Erfindung.

Die Vorrichtung zur Emission von Licht nach der vorliegenden Erfindung weist eine oder mehrere linienartig angeordnete Einrichtungen zur Abstrahlung von Licht und ein oder mehrere optische Bauteile auf, die in einer Trägerstruktur angeordnet sind. Erfindungsgemäß umfasst die Trägerstruktur ein Strangprofil, in dem die Einrichtungen zur Abstrahlung von Licht und das optische Bauteil bzw. die optischen Bauteile angeordnet sind.

Das Strangprofil ist hohl ausgebildet und weist eine Austrittsöffnung für den Austritt des Lichtes aus dem Strangprofil auf. Das Strangprofil kann dabei vorteilhaft einstückig ausgebildet werden, so dass eine wesentlich einfachere Montage möglich ist. Schließlich wird auch erreicht, dass Schmutzpartikel weniger leicht in das Innere der Trägerstruktur eindringen können, da ein einstückiges Strangprofil nur an einer Längsseite und an den Enden Öffnungen aufweist, die abgedichtet werden müssen.

Das Strangprofil weist vorzugsweise Nuten oder andere Befestigungseinrichtungen auf, in welche die Licht abstrahlenden Einrichtungen und das optische Bauteil bzw. die optischen Bauteile eingeschoben werden können, um sie innerhalb des Strangprofils anzuordnen. Auf diese Weise wird eine sehr kompakte und robuste Bauweise erreicht. Die Nuten halten die Licht abstrahlenden Einrichtungen und die optischen Bauteile sicher in der vorgesehenen Platzierung, wobei weitere Befestigungseinrichtungen grundsätzlich nicht erforderlich sein müssen, abgesehen von Befestigungseinrichtungen für die Längspositionierung innerhalb des Strangprofils.

Nach einem weiteren Aspekt der Erfindung können die Licht abstrahlenden Einrichtungen innerhalb des Strangprofils an mindestens zwei Positionen in einer Querschnittsebene des Strangprofils angeordnet werden. Hierzu können Nuten innerhalb des Strangprofils angeordnet sein, um die Licht abstrahlenden Einrichtungen in mindestens zwei verschiedenen Abständen in Bezug auf die Lichtaustrittsöffnung des Strangprofils anordnen zu können. Hierdurch wird erreicht, dass die Anordnung der Licht abstrahlenden Einrichtungen an die optimalen geometrischen Verhältnisse in Bezug auf die anderen optischen Bauteile und in Bezug auf die Messebene angepasst werden kann. Es wird dabei darauf hingewiesen, dass dieser Aspekt nicht die Verwendung eines Strangprofils voraussetzt; vielmehr kann diese Variabilität auch mit anderen Trägerstrukturen erreicht werden.

Die Variabilität der Anordnung der Licht abstrahlenden Einrichtungen kann auch für die Winkelposition vorgesehen sein. Hierzu können Nuten oder sonstige Befestigungseinrichtungen innerhalb des Strangprofils angeordnet sein, um die Licht abstrahlenden Einrichtungen in mindestens zwei verschiedenen Winkelpositionen in Bezug auf die Hauptabstrahlungsrichtung des Lichts aus dem Strangprofil anordnen zu können. Vorzugsweise sind die Nuten für die verschiedenen Winkelpositionen derart im Strangprofil angeordnet, dass die Hauptabstrahlungsrichtung der Licht abstrahlenden Einrichtungen gegenüber der Hauptabstrahlungsrichtung des Lichts aus dem Strangprofil wahlweise 0° oder 90° betragen können (im Folgenden "Winkeldifferenz" genannt).

Sofern die Winkeldifferenz 90° beträgt, kann der optische Weg von den Licht abstrahlenden Einrichtungen bis zur Lichtaustrittsöffnung aus dem Strangprofil verlängert werden, insbesondere wenn die Licht abstrahlenden Einrichtungen eng angrenzend an einer Seite des Strangprofils angeordnet sind. Es können auch andere Winkeldifferenzen vorgesehen werden; im Falle eines Strangprofils mit annähernd rechteckigem Querschnitt bietet sich jedoch eine Winkeldifferenz von 90° an.

Sofern die Licht abstrahlenden Einrichtungen im Rahmen der Variabilität der gesamten Vorrichtung derart angeordnet sind, dass eine gewisse Winkeldifferenz vorgesehen ist, sollte auch eine Spiegelplatte, eine Streuspiegelplatte oder eine reflektierende Mattscheibenplatte vorgesehen werden, um das von den Licht abstrahlenden Einrichtungen emittierte Licht derart zu reflektieren, dass das Licht in der vorgesehenen Hauptabstrahlungsrichtung des Lichts aus dem Strangprofil austritt, d.h. aus der längsseitigen Austrittsöffnung des Strangprofils. Hierzu können im Strangprofil entsprechende Nuten oder Befestigungsmittel vorgesehen sein, um die Spiegelplatte, die Streuspiegelplatte bzw. die reflektierende Mattscheibenplatte innerhalb des Strangprofils anzuordnen.

Gemäß der vorliegenden Erfindung ist das Strangprofil derart ausgestaltet , dass im Bereich der längsseitigen Austrittsöffnung des Strangprofils wahlweise an derselben Position entweder eine optische Platte (beispielsweise eine optisch klare Scheibe oder eine lichtdurchlässige Mattscheibe) oder eine Stablinse angeordnet werden. Hierdurch wird die Variabilität noch weiter erhöht. Im Bereich der Austrittsöffnung des Strangprofils sind hierzu vorzugsweise kreissegmentartige Flächen vorgesehen, die durch Nuten unterbrochen sind, um alternativ entweder eine Stablinse oder eine optische Platte aufnehmen zu können.

Es wird deutlich, dass ein und dasselbe Strangprofil für unterschiedliche Beleuchtungsaufgaben eingesetzt werden kann. Die Licht abstrahlenden Einrichtungen können in Nuten innerhalb des Strangprofils in variablen Positionen eingeschoben werden. Außerdem können die optimalen optischen Bauteile ausgewählt werden und in hierfür vorgesehene Positionen eingeschoben werden. Auf diese Weise ergibt sich ein vielfältig verwendbares Baukastensystem, wobei weder das Strangprofil noch die Einschubteile (die Licht abstrahlenden Einrichtungen und die sonstigen optischen Bauteile) angepasst oder ersetzt werden müssen.

Weiter kann das Strangprofil Rippen oder andere Befestigungsmittel aufweisen zur Befestigung einer Kalibrierungseinheit, die bei der Inbetriebnahme des Kamerasystems zum Abgleich der Kamera(s) eingesetzt werden kann.

Nach noch einem weiteren Aspekt der vorliegenden Erfindung ist entlang des optischen Weges des Lichtes nach den Licht abstrahlenden Einrichtungen - jedoch mit Abstand von der Austrittsöffnung des Lichts aus dem Strangprofil - eine Streuspiegelplatte oder eine reflektierende Mattscheibenplatte angeordnet, welche den größten Anteil des auftreffenden Lichtes in einem relativ kleinem Winkelbereich um den Reflexionsausfallwinkel streuend reflektiert. Mit streuender Reflektion ist dabei gemeint, dass keine Reflektion wie bei einem üblichen Spiegel erreicht werden soll, sondern dass um den Reflektionsaustrittswinkel ein Streukegel vorhanden sein soll. Die Streuspiegelplatte der vorliegenden Erfindung ist daher vorzugsweise eine Platte mit einer Aluminium-Bronze-Beschichtung, eine Platte mit einer matten Oberfläche (beispielsweise einer matt-weißen Oberfläche), eine Platte mit einer Beschichtung aus mattem Baryt oder eine Platte mit einer Perlwandbeschichtung ist. Auf diese Weise wird erreicht, dass bereits innerhalb des Strangprofils eine Streuung des Lichtes erreicht wird, so dass das Licht beim Austritt aus dem Strangprofil bereits sehr gleichmäßig ist.

Dieser Aspekt der Erfindung ist von Bedeutung, wenn beispielsweise elektro-optische Elemente bzw. LEDs verwendet werden, die - auch wenn sie entlang einer Linie angeordnet sind - grundsätzlich nur punktuelle Lichtquellen sind, so dass nicht von vornherein ein gleichmäßiges linienartiges Licht erzeugt wird. Es wird dabei darauf hingewiesen, dass dieser Aspekt ebenfalls nicht die Verwendung eines Strangprofils voraussetzt; vielmehr kann diese Maßnahme zur Erzeugung eines gleichmäßigeren linienartigen Lichtes auch mit anderen Trägerstrukturen erreicht werden.

Im Bereich der Austrittsöffnung des Lichts aus dem Strangprofil kann eine klare optische Scheibe, eine lichtdurchlässige Mattscheibe bzw. ein Diffusor oder eine Stablinse angeordnet sein. Die Auswahl des geeigneten optischen Bauteils hängt insbesondere davon ab, ob ein hohe Lichtausbeute oder eher eine sehr gleichmäßige Beleuchtung gewünscht wird. Beispielsweise wird im Durchlichtverfahren eher eine hohe Lichtausbeute gewünscht, wohingegen im Auflichtverfahren eher eine gleichmäßige Beleuchtung gewünscht wird. Je nach Anwendungsfall können jedoch auch umgekehrte Verhältnisse gewünscht sein.

Nach der vorliegenden Erfindung umfassen die Licht abstrahlenden Einrichtungen jeweils vorzugsweise eine Platine, auf welcher vorzugsweise elektro-optische Elemente bzw. LEDs oder sonstige Beleuchtungsmittel linienartig angeordnet sind. Die Platinen können dabei vorteilhaft derart modulartig aufgebaut sein, dass die Gesamtlänge der Licht abstrahlenden Einrichtungen von der Anzahl und der jeweiligen Länge der aneinander gereihten Platinen abhängt. Je nach den eingeschobenen Platinen kann so bei der Länge des Strangprofils von beispielsweise 1000 mm eine Lichtlinie mit einer Breite von 150 mm, 300 mm, 450 mm, 600 mm, 750 mm oder 900 mm erzeugt werden. Je nach Messaufgabe kann also variabel nur der tatsächlich erforderliche Bereich ausgeleuchtet werden, wobei dasselbe Strangprofil verwendet werden kann. Für andere Messaufgaben können mit einem längeren Strangprofil auch Lichtlinien mit einer Breite von beispielsweise 1500 mm erzeugt werden.

Für diese Modularität weisen die Licht abstrahlenden Einrichtungen an den jeweils angrenzenden Kanten vorteilhaft Steckverbindungen auf, um sämtliche Licht abstrahlenden Einrichtungen von einer Seite des Strangprofils her mit Strom versorgen zu können und/oder über Verbindungsleitungen ansteuern zu können. Außerdem können die Licht abstrahlenden Einrichtungen durch ein Zwischeneinschubteil unterbrochen sein, welches mit den angrenzenden Licht abstrahlenden Einrichtungen über Steckverbindungen verbunden ist, um sämtliche Licht abstrahlenden Einrichtungen von einer Seite des Strangprofils her mit Strom versorgen zu können und/oder über Verbindungsleitungen ansteuern zu können. Ein derartiges Zwischeneinschubteil ist dann von Vorteil, wenn beispielsweise nur die Kanten einer Materialbahn ausgeleuchtet werden sollen, nicht jedoch zwingend der mittlere Bereich einer Materialbahn. Für diesen Fall dient das Zwischeneinschubteil nur als Steckverbindung bzw. als Abstandhalter zwischen den Licht abstrahlenden Einrichtungen, die in den jeweiligen Randbereichen des Strangprofils angeordnet sind.

Zu einem Ende des linienartig beleuchteten Bereichs nimmt die Lichtintensität grundsätzlich ab, da in den Endbereichen geringere Überlappungseffekte vorhanden sind. Um diesen Effekt auszugleichen, kann erfindungsgemäß vorgesehen werden, dass bei den Licht abstrahlenden Einrichtungen, die am Rand des Strangprofils angeordnet sind, der Zwischenabstand der elektro-optischen Elemente bzw. der LEDs zum Rand hin kontinuierlich geringer wird, um eine gleichmäßige Ausleuchtung auch in den Randbereichen zu erreichen. Alternativ oder kumulativ kann vorgesehen sein, dass die elektro-optischen Elemente bzw. die LEDs zum Rand hin eine höhere Lichtausbeute abstrahlen, um eine gleichmäßige Ausleuchtung auch in den Randbereichen zu erreichen.

Nach noch einem weiteren Aspekt der vorliegenden Erfindung können im Strangprofil ein oder mehrere innere Kanäle vorgesehen sein, um eine Kühlflüssigkeit für die Ableitung von Wärme dadurch hindurchführen zu können. Hierzu können mindestens zwei innere Kanäle vorgesehen sein, die an einem Ende des Strangprofils durch ein Endstück in Verbindung stehen, so dass ein erster innerer Kanal als Zuleitung und ein zweiter innerer Kanal als Ableitung der Kühlflüssigkeit verwendet werden kann. Die Kanäle stehen daher vorteilhaft nur an einem Ende des Strangprofils mit einer Vorrichtung zur Versorgung mit Kühlflüssigkeit in Verbindung.

An Stelle von inneren Kanälen kann innerhalb des Strangprofils auch ein längliches Rohr eingebracht sein, das an einem Ende in eine U-Form gebogen ist. Die zwei Arme des U-förmigen Rohres liegen dabei an inneren, jeweils gegenüberliegenden Flächen des Strangprofils an, wobei die inneren Flächen an die Form des U-förmigen Rohres angepasst sind, um eine erhöhte Wärmeleitung auf das Rohr zu erreichen.

Schließlich können alternativ oder kumulativ auch Kühlrippen an einer Außenseite Kühlrippen des Strangprofils vorgesehen sein, um eine einfache, aber effiziente Kühlung zu erreichen.

Eine Messanordnung nach der vorliegenden Erfindung besteht aus einer oben beschriebenen Vorrichtung zur Emission von Licht aus einer oder mehreren Kameras, insbesondere Zeilenkameras, wobei sowohl die Emissionsvorrichtung als auch die Kamera bzw. die Kameras auf eine Messebene ausgerichtet sind.

Ein System nach der vorliegenden Erfindung zur Erfassung der Bahnkanten bzw. zur Detektierung von Fehlern und/oder Unregelmäßigkeiten auf einer Materialbahn, die entlang einer Messebene vorbeigeführt wird, umfasst eine derartig Messanordnung und eine Auswerteeinheit zur Analyse der Daten von der Kamera bzw. von den Kameras, um Fehler und/oder Unregelmäßigkeiten festzustellen oder Bahnkantenpositionen der Materialbahn bzw. deren Bahnbreite zu erfassen.

Die vorliegende Erfindung wird nachfolgend anhand bevorzugter Ausführungsformen unter Bezug auf die beigefügten Zeichnungen erläutert.
- **Fig. 1**: zeigt ein System zur Erfassung der Bahnkanten bzw. zur Detektierung von Fehlern und/oder Unregelmäßigkeiten auf einer Materialbahn im Auflichtverfahren, das eine Vorrichtung zur Emission von linienartigem Licht nach einer Ausführungsform der vorliegenden Erfindung umfasst;
- **Fig. 2**: zeigt ein System zur Erfassung der Bahnkanten bzw. zur Detektierung von Fehlern und/oder Unregelmäßigkeiten auf einer Materialbahn im Durchlichtverfahren, das eine Vorrichtung zur Emission von linienartigem Licht nach einer weiteren Ausführungsform der vorliegenden Erfindung umfasst;
- **Fig. 3**: zeigt ein Strangprofil für eine Vorrichtung zur Emission von linienartigem Licht nach einer Ausführungsform der vorliegenden Erfindung mit verschiedenen möglichen Einschubteilen;
- **Fig. 4**: zeigt einen Querschnitt eines Strangprofils für eine Vorrichtung zur Emission von linienartigem Licht nach einer Ausführungsform der vorliegenden Erfindung;
- **Fig. 5**: zeigt ein Strangprofil für eine Vorrichtung zur Emission von linienartigem Licht nach einer Ausführungsform der vorliegenden Erfindung mit einer ersten Variante möglicher Einschubteile;
- **Fig. 6**: zeigt ein Strangprofil für eine Vorrichtung zur Emission von linienartigem Licht nach einer Ausführungsform der vorliegenden Erfindung mit einer zweiten Variante möglicher Einschubteile;
- **Fig. 7**: zeigt ein Strangprofil für eine Vorrichtung zur Emission von linienartigem Licht nach einer Ausführungsform der vorliegenden Erfindung mit einer dritten Variante möglicher Einschubteile;
- **Fig. 8**: zeigt ein Strangprofil für eine Vorrichtung zur Emission von linienartigem Licht nach einer Ausführungsform der vorliegenden Erfindung mit einer vierten Variante möglicher Einschubteile;

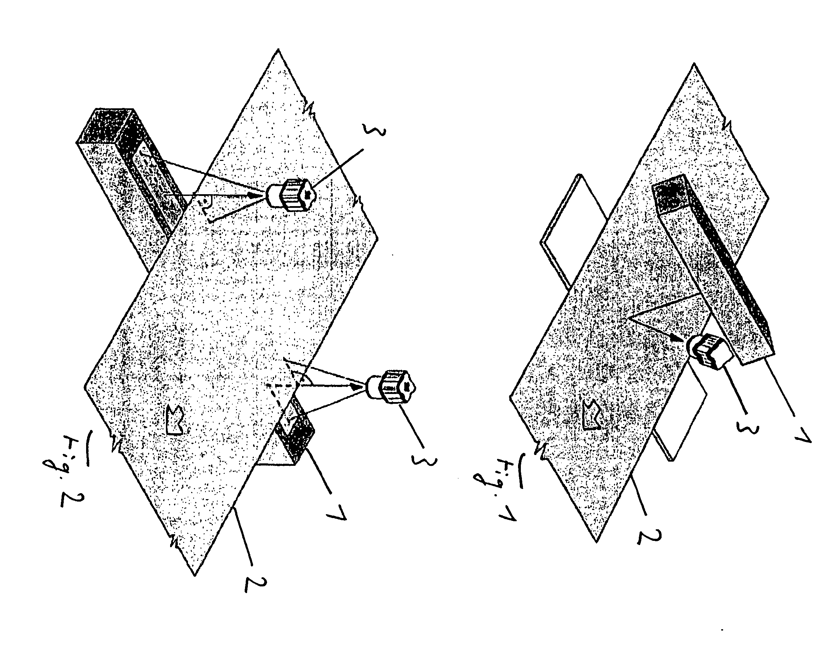

**Fig. 1** zeigt ein System zur Erfassung der Bahnkanten bzw. zur Detektierung von Fehlern und/oder Unregelmäßigkeiten auf einer Materialbahn im Auflichtverfahren, das eine Vorrichtung **1** zur Emission von linienartigem Licht nach einer Ausführungsform der vorliegenden Erfindung umfasst. Die Vorrichtung erzeugt auf einer Materialbahn **2** ein linienartiges Licht, also ein gebündeltes Licht, das auf der Materialbahn **2** eine bestrahlte Linie erzeugt, die quer zur Materialbahn **2** verläuft. Mit einem derartigen System kann beispielsweise eine Papierbahn, die mit hoher Geschwindigkeit entlang der Messebene vorbeigeführt wird, untersucht werden, wobei mindestens eine Zeilenkamera **3** verwendet wird, um durch die Detektierung von Helligkeitsunterschieden auf der Materialbahn im Auflicht- oder Durchlichtverfahren Fehler und/oder Unregelmäßigkeiten zu erkennen.

Die Vorrichtung **1** zur Emission von linienartigem Licht kann auch für das Durchlichtverfahren verwendet werden. **Fig. 2** zeigt ein System zur Erfassung der Bahnkanten bzw. zur Detektierung von Fehlern und/oder Unregelmäßigkeiten auf einer Materialbahn im Durchlichtverfahren, das eine erfindungsgemäß Vorrichtung **1** nach einer weiteren Ausführungsform der vorliegenden Erfindung umfasst. Die Vorrichtung **1** ist unterhalb der Materialbahn **2** angeordnet und strahlt linienartiges Licht nach oben hin in Richtung von zwei Kameras **3.**

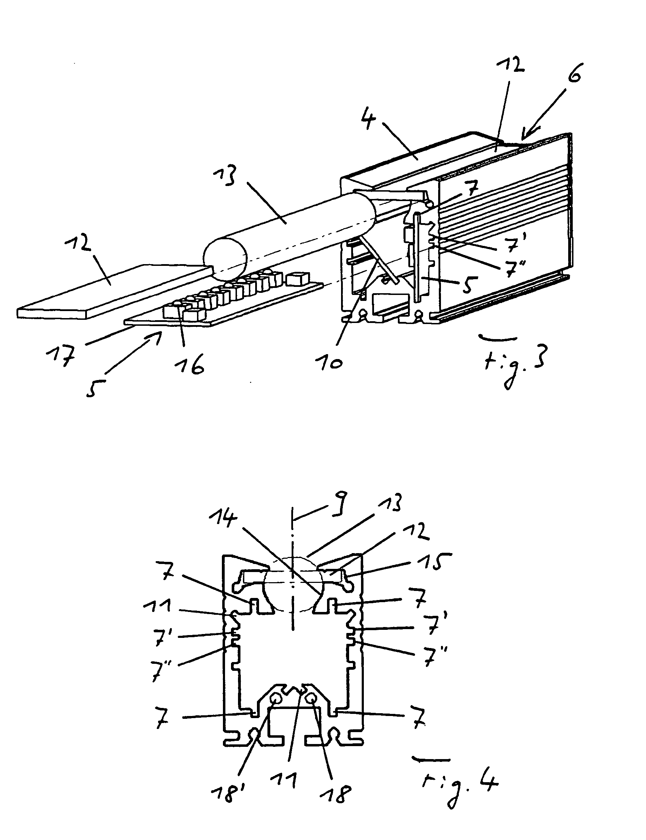

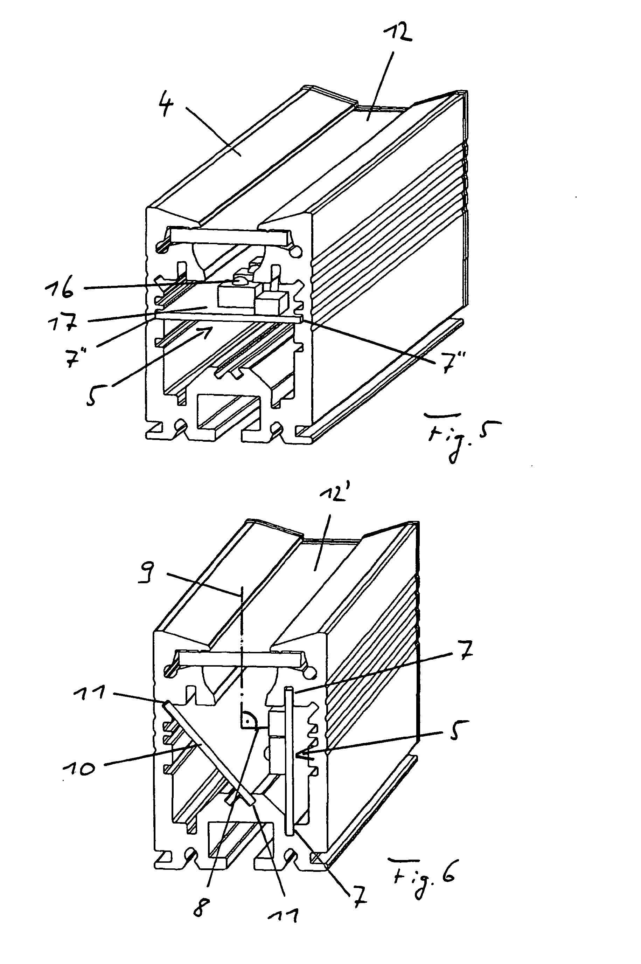

**Fig. 3** zeigt ein Strangprofil **4 -** das vorzugsweise aus Aluminium hergestellt ist - für eine Vorrichtung zur Emission von linienartigem Licht nach einer Ausführungsform der vorliegenden Erfindung mit verschiedenen möglichen Einschubteilen. **Fig. 5** bis **Fig. 8** zeigen das Strangprofil **4** nach derselben Ausführungsform mit vier verschiedenen Varianten möglicher Einschubteile bzw. möglicher Anordnungen der Einschubteile innerhalb des Strangprofils.

Die Vorrichtung zur Emission von Licht nach der vorliegenden Erfindung weist eine oder mehrere linienartig angeordnete Einrichtungen **5** zur Abstrahlung von Licht und ein oder mehrere optische Bauteile auf, die in das Strangprofil **4** eingeschoben sind. Das Strangprofil **4** ist in dem Ausführungsbeispiel hohl ausgebildet und weist eine Austrittsöffnung **6** für den Austritt des Lichtes aus dem Strangprofil auf. Das Strangprofil **4** ist vorteilhaft einstückig ausgebildet werden, so dass eine wesentlich einfachere Montage möglich ist. Schließlich wird auch erreicht, dass Schmutzpartikel weniger leicht in das Innere der Trägerstruktur eindringen können, da ein einstückiges Strangprofil nur an einer Längsseite und an den Enden Öffnungen aufweist, die abgedichtet werden müssen.

Das Strangprofil **4** weist in dem dargestellten Ausführungsbeispiel Nuten **7, 7'** und **7"** auf, in welche die Licht abstrahlenden Einrichtungen **5** und das optische Bauteil bzw. die optischen Bauteile eingeschoben werden können, um sie innerhalb des Strangprofils **4** an verschiedenen möglichen Positionen anzuordnen. Auf diese Weise wird eine sehr kompakte, robuste und variable Bauweise erreicht. Die Nuten **7, 7'** und **7"** halten die Licht abstrahlenden Einrichtungen und die optischen Bauteile sicher in der vorgesehenen Platzierung, wobei weitere Befestigungseinrichtungen grundsätzlich nicht erforderlich sein müssen, abgesehen von Befestigungseinrichtungen für die Längspositionierung innerhalb des Strangprofils.

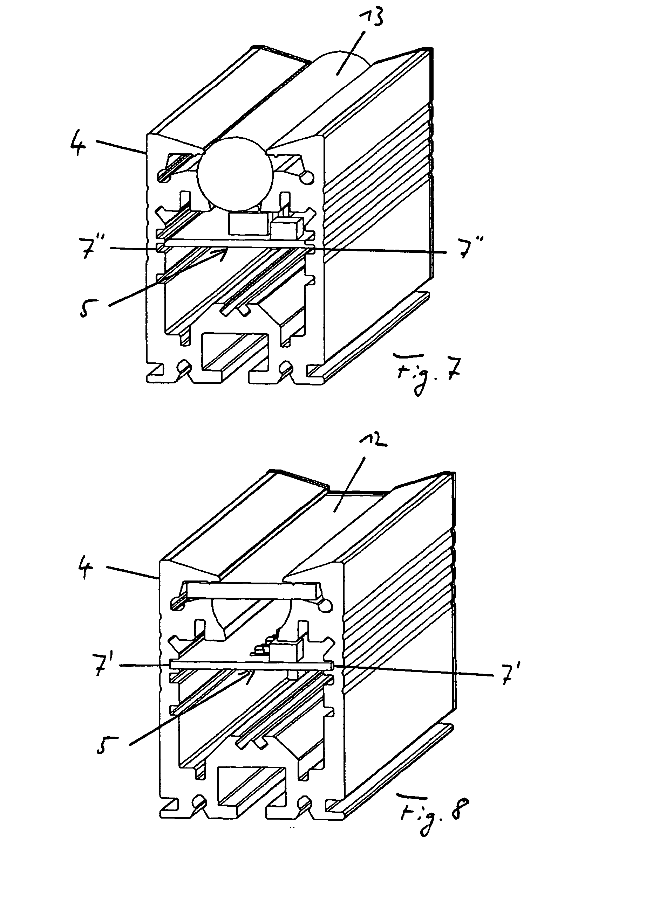

Die Nuten **7'** und **7"** sind innerhalb des Strangprofils derart angeordnet, um die Licht abstrahlenden Einrichtungen in zwei verschiedenen Abständen in Bezug auf die Lichtaustrittsöffnung **6** des Strangprofils anordnen zu können (vgl. **Fig. 7** im Gegensatz zu **Fig. 8****).** Hierfür ist der Abstand der gegenüberliegenden Nuten für die Position bei **7'** identisch mit dem Abstand der gegenüberliegenden Nuten für die Position bei **7",** damit dieselbe Platine **17** für eine Licht abstrahlende Einrichtung an beiden Positionen eingeschoben werden kann. Dadurch wird erreicht, dass die Anordnung der Licht abstrahlenden Einrichtungen an die optimalen geometrischen Verhältnisse in Bezug auf die anderen optischen Bauteile und in Bezug auf die Messebene - also die Materialbahn **2 -** angepasst werden kann.

Die Variabilität der Anordnung der Licht abstrahlenden Einrichtungen ist in dem Ausführungsbeispiel auch für die Winkelposition vorgesehen. Hierzu sind die Nuten **7** innerhalb des Strangprofils angeordnet, um die Licht abstrahlenden Einrichtungen in zwei verschiedenen Winkelpositionen in Bezug auf die Hauptabstrahlungsrichtung des Lichts aus dem Strangprofil anordnen zu können. Die Nuten **7, 7'** und **7"** sind hierfür derart im Strangprofil angeordnet, dass die Hauptabstrahlungsrichtung **8** der Licht abstrahlenden Einrichtungen **5** gegenüber der Hauptabstrahlungsrichtung **9** des Lichts aus dem Strangprofil wahlweise 0° oder 90° betragen können (siehe **Fig. 6** zur Winkeldifferenz von 90°). Hierfür ist der Abstand der gegenüberliegenden Nuten für die Position bei **7 (****Fig. 6****)** identisch mit dem Abstand der gegenüberliegenden Nuten für die Position bei **7' (****Fig. 8****)** bzw. bei **7" (****Fig. 7****),** damit dieselbe Platine **17** für eine Licht abstrahlende Einrichtung variabel an all diesen Positionen eingeschoben werden kann.

Sofern die Winkeldifferenz 90° wie bei der in **Fig. 6** dargestellten Ausführungsform beträgt, kann der optische Weg von den Licht abstrahlenden Einrichtungen bis zur Lichtaustrittsöffnung aus dem Strangprofil verlängert werden, insbesondere wenn die Licht abstrahlenden Einrichtungen eng angrenzend an einer Seite des Strangprofils (in **Fig. 6** an der rechten Seite) angeordnet sind. Es können auch andere Winkeldifferenzen vorgesehen werden; im Falle eines Strangprofils mit annähernd rechteckigem Querschnitt bietet sich jedoch eine Winkeldifferenz von 90° an.

Sofern die Licht abstrahlenden Einrichtungen **5** im Rahmen der Variabilität der gesamten Vorrichtung derart angeordnet sind, dass eine Winkeldifferenz vorgesehen ist, sollte auch eine Spiegelplatte, eine Streuspiegelplatte **10** oder eine reflektierende Mattscheibenplatte vorgesehen werden, um das von den Licht abstrahlenden Einrichtungen emittierte Licht derart zu reflektieren, dass das Licht in der vorgesehenen Hauptabstrahlungsrichtung **9** des Lichts aus dem Strangprofil austritt. Hierzu können im Strangprofil entsprechende Nuten **11** vorgesehen sein, um die Spiegelplatte, die Streuspiegelplatte **10** bzw. die reflektierende Mattscheibenplatte innerhalb des Strangprofils anzuordnen.

Nach einem weiteren Aspekt der vorliegenden Erfindung kann das Strangprofil derart ausgestaltet sein, dass im Bereich der längsseitigen Austrittsöffnung **6** des Strangprofils wahlweise an derselben Position entweder eine optische Platte **12** (beispielsweise eine optisch klare Scheibe oder eine lichtdurchlässige Mattscheibe) oder eine Stablinse **13** angeordnet werden (vgl. **Fig. 4****).** Hierdurch wird die Variabilität noch weiter erhöht. Im Bereich der Austrittsöffnung **6** des Strangprofils sind hierzu vorzugsweise kreissegmentartige Flächen **14** vorgesehen, die durch Nuten **15** unterbrochen sind, um alternativ entweder eine Stablinse **13** oder eine optische Platte **12** aufnehmen zu können.

Bei Verwendung einer Stablinse **13** kann der Hohlraum des Strangprofils **4** abgedichtet werden, indem in den Nuten **15** bei der Montage jeweils eine Gummidichtung eingebracht wird. Die Abdichtung mittels Gummidichtungen kann auch bei optischen Platten vorgesehen werden, wobei diese Gummidichtungen dann entsprechend kleiner ausgebildet sind.

Es wird deutlich, dass ein und dasselbe Strangprofil für unterschiedliche Beleuchtungsaufgaben eingesetzt werden kann. Die Licht abstrahlenden Einrichtungen können in Nuten **7, 7'** und **7"** innerhalb des Strangprofils in variablen Positionen eingeschoben werden. Außerdem können die optimalen optischen Bauteile ausgewählt werden und in hierfür vorgesehene Positionen eingeschoben werden. Auf diese Weise ergibt sich ein vielfältig verwendbares Baukastensystem, wobei weder das Strangprofil noch die Einschubteile (die Licht abstrahlenden Einrichtungen und die sonstigen optischen Bauteile) angepasst oder ersetzt werden müssen.

Nach noch einem weiteren Aspekt der vorliegenden Erfindung ist entlang des optischen Weges des Lichtes nach den Licht abstrahlenden Einrichtungen **5 -** jedoch mit Abstand von der Austrittsöffnung **6** des Lichts aus dem Strangprofil - eine Streuspiegelplatte **10** oder eine reflektierende Mattscheibenplatte angeordnet, welche den größten Anteil des auftreffenden Lichtes in einem relativ kleinem Winkelbereich um den Reflexionsausfallwinkel streuend reflektiert. Mit streuender Reflektion ist dabei gemeint, dass keine Reflektion wie bei einem üblichen Spiegel erreicht werden soll, sondern dass um den Reflektionsaustrittswinkel ein Streukegel vorhanden sein soll. Die Streuspiegelplatte der vorliegenden Erfindung ist daher vorzugsweise eine Platte mit einer Aluminium-Bronze-Beschichtung, eine Platte mit einer matten Oberfläche (beispielsweise einer matt-weißen Oberfläche), eine Platte mit einer Beschichtung aus mattem Baryt oder eine Platte mit einer Perlwandbeschichtung ist. Auf diese Weise wird erreicht, dass bereits innerhalb des Strangprofils eine Streuung des Lichtes erreicht wird, so dass das Licht beim Austritt aus dem Strangprofil bereits sehr gleichmäßig ist.

Dieser Aspekt der Erfindung ist von Bedeutung, wenn beispielsweise elektro-optische Elemente bzw. LEDs **16** verwendet werden, die - auch wenn sie entlang einer Linie angeordnet sind - grundsätzlich nur punktuelle Lichtquellen sind, so dass nicht von vornherein ein gleichmäßiges linienartiges Licht erzeugt wird.

Im Bereich der Austrittsöffnung **6** des Lichts aus dem Strangprofil kann eine klare optische Scheibe **12',** eine lichtdurchlässige Mattscheibe **12** bzw. ein Diffusor oder eine Stablinse **13** angeordnet sein. Die Auswahl des geeigneten optischen Bauteils hängt insbesondere davon ab, ob ein hohe Lichtausbeute oder eher eine sehr gleichmäßige Beleuchtung gewünscht wird. Beispielsweise wird im Durchlichtverfahren eher eine hohe Lichtausbeute gewünscht, wohingegen im Auflichtverfahren eher eine gleichmäßige Beleuchtung gewünscht wird. Je nach Anwendungsfall können jedoch auch umgekehrte Verhältnisse gewünscht sein.

Nach einem Ausführungsbeispiel der Erfindung umfassen die Licht abstrahlenden Einrichtungen jeweils vorzugsweise eine Platine **17,** auf welcher vorzugsweise elektro-optische Elemente bzw. LEDs **16** linienartig angeordnet sind. Die Platinen **17** können dabei vorteilhaft derart modulartig aufgebaut sein, dass die Gesamtlänge der Licht abstrahlenden Einrichtungen **5** von der Anzahl und der jeweiligen Länge der aneinander gereihten Platinen **17** abhängt. Je nach den eingeschobenen Platinen kann so bei der Länge des Strangprofils von beispielsweise 1000 mm eine Lichtlinie mit einer Breite von 150 mm, 300 mm, 450 mm, 600 mm, 750 mm oder 900 mm erzeugt werden. Je nach Messaufgabe kann also variabel nur der tatsächlich erforderliche Bereich ausgeleuchtet werden, wobei dasselbe Strangprofil verwendet werden kann. Für andere Messaufgaben können mit einem längeren Strangprofil auch Lichtlinien mit einer Breite von beispielsweise 1500 mm erzeugt werden.

Für diese Modularität weisen die Licht abstrahlenden Einrichtungen 5 an den jeweils angrenzenden Kanten vorteilhaft (nicht dargestellte) Steckverbindungen auf, um sämtliche Licht abstrahlenden Einrichtungen von einer Seite des Strangprofils her mit Strom versorgen zu können und/oder über Verbindungsleitungen ansteuern zu können. Außerdem können die Licht abstrahlenden Einrichtungen 5 durch ein (nicht dargestelltes) Zwischeneinschubteil unterbrochen sein, welches mit den angrenzenden Licht abstrahlenden Einrichtungen über Steckverbindungen verbunden ist, um sämtliche Licht abstrahlenden Einrichtungen von einer Seite des Strangprofils her mit Strom versorgen zu können und/oder über Verbindungsleitungen ansteuern zu können. Ein derartiges Zwischeneinschubteil ist dann von Vorteil, wenn beispielsweise nur die Kanten einer Materialbahn **2** ausgeleuchtet werden sollen, nicht jedoch zwingend der mittlere Bereich einer Materialbahn. Für diesen Fall dient das Zwischeneinschubteil nur als Steckverbindung bzw. als Abstandhalter zwischen den Licht abstrahlenden Einrichtungen, die in den jeweiligen Randbereichen des Strangprofils angeordnet sind.

Zu einem Ende des linienartig beleuchteten Bereichs nimmt die Lichtintensität grundsätzlich ab, da in den Endbereichen geringere Überlappungseffekte vorhanden sind. Um diesen Effekt auszugleichen, kann erfindungsgemäß vorgesehen werden, dass bei den Licht abstrahlenden Einrichtungen, die am Rand des Strangprofils angeordnet sind, der Zwischenabstand der elektro-optischen Elemente bzw. der LEDs **16** zum Rand hin kontinuierlich geringer wird, um eine gleichmäßige Ausleuchtung auch in den Randbereichen zu erreichen. Alternativ oder kumulativ kann vorgesehen sein, dass die elektro-optischen Elemente bzw. die LEDs **16** zum Rand hin eine höhere Lichtausbeute abstrahlen, um eine gleichmäßige Ausleuchtung auch in den Randbereichen zu erreichen.

Nach noch einem weiteren Aspekt der vorliegenden Erfindung können im Strangprofil **4** ein oder mehrere innere Kanäle **18, 18'** vorgesehen sein, um eine Kühlflüssigkeit für die Ableitung von Wärme dadurch hindurchführen zu können (siehe **Fig. 4****).** Hierzu können mindestens zwei innere Kanäle **18, 18'** vorgesehen sein, die an einem Ende des Strangprofils durch ein (nicht dargestelltes) Endstück in Verbindung stehen, so dass ein erster innerer Kanal **18** als Zuleitung und ein zweiter innerer Kanal **18'** als Ableitung der Kühlflüssigkeit verwendet werden kann. Die Kanäle stehen daher vorteilhaft nur an einem Ende des Strangprofils mit einer Vorrichtung zur Versorgung mit Kühlflüssigkeit in Verbindung.

An Stelle von inneren Kanälen kann innerhalb des Strangprofils auch ein (nicht dargestelltes) längliches Rohr oder ein Schlauch eingebracht sein, das an einem Ende in eine U-Form gebogen ist. Die zwei Arme des U-förmigen Rohres liegen dabei an inneren, jeweils gegenüberliegenden Flächen des Strangprofils an, wobei die inneren Flächen an die Form des U-förmigen Rohres angepasst sind, um eine erhöhte Wärmeleitung auf das Rohr zu erreichen.

Schließlich können alternativ oder kumulativ auch Kühlrippen an einer Außenseite Kühlrippen des Strangprofils vorgesehen sein, um eine einfache, aber effiziente Kühlung zu erreichen. In diesem Fall kann auch ein Gebläse vorgesehen werden.

## Patentansprüche

1. Vorrichtung zur Emission von Licht, welche eine oder mehrere linienartig angeordnete Einrichtungen (5) zur Abstrahlung von Licht und ein oder mehrere optische Bauteile (10, 12, 12', 13) aufweist, die in einer Trägerstruktur angeordnet sind,
wobei die Trägerstruktur ein Strangprofil (4) umfasst, in dem die Einrichtungen (5) zur Abstrahlung von Licht und das optische Bauteil bzw. die optischen Bauteile (10, 12, 12', 13) angeordnet sind,
das Strangprofil (4) hohl ist und eine Austrittsöffnung (6) für den Austritt des Lichtes aus dem Strangprofil (4) aufweist, **dadurch gekennzeichnet, dass** das Strangprofil derart ausgestaltet ist, dass im Bereich der Austrittsöffnung (6) des Strangprofils wahlweise an derselben Position entweder eine optische Platte (12, 12') oder eine Stablinse (13) angeordnet werden kann.

2. Vorrichtung gemäss Anspruch 1, **dadurch gekennzeichnet, dass** sich im Bereich der Austrittsöffnung (6) des Strangprofils kreissegmentartige Flächen (14) zur Aufnahme einer Stablinse (13) befinden, die durch Nuten (15) unterbrochen sind, um alternativ eine optische Platte (12, 12') aufnehmen zu können.

3. Vorrichtung gemäss einem der vorhergehenden Ansprüche, **dadurch gekennzeichnet, dass** das Strangprofil (4) einstückig ausgebildet ist.

4. Vorrichtung gemäss einem der vorhergehenden Ansprüche, **dadurch gekennzeichnet, dass** das Strangprofil Nuten (7, 7', 7", 11, 15) aufweist, in welche die Einrichtungen (5) zur Abstrahlung von Licht und das optische Bauteil bzw. die optischen Bauteile (10, 12, 12', 13) eingeschoben werden können, um sie innerhalb des Strangprofils anzuordnen.

5. Vorrichtung gemäss einem der vorhergehenden Ansprüche, **dadurch gekennzeichnet, dass** das Strangprofil (4) derart ausgestaltet ist, dass die Einrichtungen (5) zur Abstrahlung von Licht innerhalb des Strangprofils an mindestens zwei Positionen in einer Querschnittsebene des Strangprofils angeordnet werden kann.

6. Vorrichtung gemäss Anspruch 5, **dadurch gekennzeichnet, dass** Nuten (7', 7") innerhalb des Strangprofils angeordnet sind, um die Einrichtungen zur Abstrahlung von Licht in mindestens zwei verschiedenen Abständen in Bezug auf die Lichtaustrittsöffnung (6) des Strangprofils anordnen zu können.

7. Vorrichtung gemäss Anspruch 5 oder 6, **dadurch gekennzeichnet, dass** Nuten (7, 7', 7") innerhalb des Strangprofils angeordnet sind, um die Einrichtungen zur Abstrahlung von Licht in mindestens zwei verschiedenen Winkelpositionen in Bezug auf die Hauptabstrahlungsrichtung (9) des Lichts aus dem Strangprofil anordnen zu können.

8. Vorrichtung gemäss Anspruch 7, **dadurch gekennzeichnet, dass** die Nuten (7, 7', 7") für die verschiedenen Winkelpositionen derart im Strangprofil angeordnet sind, dass die Hauptabstrahlungsrichtung der Einrichtungen zur Abstrahlung von Licht gegenüber der Hauptabstrahlungsrichtung des Lichts aus dem Strangprofil wahlweise 0 deg. oder 90 deg. betragen können.

9. Vorrichtung gemäss einem der vorhergehenden Ansprüche, **dadurch gekennzeichnet, dass** im Strangprofil (4) Nuten (11) oder Befestigungsmittel vorgesehen sind, um eine Spiegelplatte, eine Streuspiegelplatte (10) oder eine reflektierende Mattscheibenplatte derart anzuordnen, dass das von den Einrichtungen zur Abstrahlung von Licht emittierte Licht derart reflektiert wird, dass die Hauptabstrahlungsrichtung (8) der Einrichtungen zur Abstrahlung von Licht mit der Hauptabstrahlungsrichtung (9) des Lichts aus dem Strangprofil zusammenfällt.

10. Vorrichtung gemäss einem der vorhergehenden Ansprüche, **dadurch gekennzeichnet, dass** entlang des optischen Weges des Lichtes nach den Einrichtungen (5) zur Abstrahlung von Licht jedoch mit Abstand von der Austrittsöffnung (6) des Lichts aus dem Strangprofil eine Streuspiegelplatte (10) oder eine reflektierende Mattscheibenplatte angeordnet ist, welche den grössten Anteil des auftreffenden Lichtes in einem relativ kleinem Winkelbereich um den Reflexionsausfallwinkel streuend reflektiert.

11. Vorrichtung gemäss Anspruch 10, **dadurch gekennzeichnet, dass** die Streuspiegelplatte (10) bzw. die reflektierende Mattscheibenplatte eine Platte mit einer Aluminium-Bronze-Beschichtung, eine Platte mit einer matten Oberfläche, eine Platte mit einer Beschichtung aus mattem Baryt oder eine Platte mit einer Perlwandbeschichtung ist.

12. Vorrichtung gemäss einem der vorhergehenden Ansprüche, **dadurch gekennzeichnet, dass** im Bereich der Austrittsöffnung (6) des Lichts aus dem Strangprofil eine klare optische Scheibe (12'), eine lichtdurchlässige Mattscheibe (12) bzw. ein Diffusor oder eine Stablinse (13) angeordnet ist.

13. Vorrichtung gemäss einem der vorhergehenden Ansprüche, **dadurch gekennzeichnet, dass** die Einrichtungen zur Abstrahlung von Licht jeweils eine Platine (17) umfassen, auf welcher vorzugsweise elektro-optische Elemente bzw. LEDs (16) linienartig angeordnet sind.

14. Vorrichtung gemäss Anspruch 13, **dadurch gekennzeichnet, dass** die Platinen für die Einrichtungen zur Abstrahlung von Licht derart modulartig aufgebaut sind, dass die Gesamtlänge der Licht abstrahlenden Einrichtungen von der Anzahl und der jeweiligen Länge der aneinander gereihten Platinen (17) abhängt.

15. Vorrichtung gemäss Anspruch 13 oder 14, **dadurch gekennzeichnet, dass** die Licht abstrahlenden Einrichtungen an den jeweils angrenzenden Kanten Steckverbindungen aufweisen, um sämtliche Licht abstrahlenden Einrichtungen von einer Seite des Strangprofils her mit Strom versorgen zu können und/oder über Verbindungsleitungen ansteuern zu können.

16. Vorrichtung gemäss einem der vorhergehenden Ansprüche, **dadurch gekennzeichnet, dass** die Licht abstrahlenden Einrichtungen durch ein Zwischeneinschubteil unterbrochen sind, welches mit den angrenzenden Licht abstrahlenden Einrichtungen über Steckverbindungen verbunden ist, um sämtliche Licht abstrahlenden Einrichtungen von einer Seite des Strangprofils her mit Strom versorgen zu können und/oder über Verbindungsleitungen ansteuern zu können.

17. Vorrichtung gemäss einem der vorhergehenden Ansprüche, **dadurch gekennzeichnet, dass** bei den Licht abstrahlenden Einrichtungen, die am Rand des Strangprofils angeordnet sind, der Zwischenabstand der elektro-optischen Elemente bzw. der LEDs (16) zum Rand hin kontinuierlich geringer wird, um eine gleichmässige Ausleuchtung auch in den Randbereichen zu erreichen.

18. Vorrichtung gemäss einem der vorhergehenden Ansprüche, **dadurch gekennzeichnet, dass** die Licht abstrahlenden Einrichtungen, die am Rand des Strangprofils angeordnet sind, derart durch eine Steuerungseinrichtung angesteuert werden können, dass die elektro-optischen Elemente bzw. die LEDs (16) zum Rand hin eine höhere Lichtausbeute abstrahlen, um eine gleichmässige Ausleuchtung auch in den Randbereichen zu erreichen.

19. Vorrichtung gemäss einem der vorhergehenden Ansprüche, **dadurch gekennzeichnet, dass** im Strangprofil ein oder mehrere innere Kanäle (18, 18') vorgesehen sind, um eine Kühlflüssigkeit für die Ableitung von Wärme **dadurch** hindurchführen zu können.

20. Vorrichtung gemäss Anspruch 19, **dadurch gekennzeichnet, dass** mindestens zwei innere Kanäle (18, 18') vorgesehen sind, die an einem Ende des Strangprofils durch ein Endstück in Verbindung stehen, so dass ein erster innerer Kanal (18) als Zuleitung und ein zweiter innerer Kanal (18') als Ableitung der Kühlflüssigkeit verwendet werden kann.

21. Vorrichtung gemäss einem der vorhergehenden Ansprüche, **dadurch gekennzeichnet, dass** innerhalb des Strangprofils ein längliches, an einem Ende in eine U-Form gebogenes Rohr eingebracht ist, um eine Kühlflüssigkeit für die Ableitung von Wärme dadurch hindurchführen zu können.

22. Vorrichtung gemäss Anspruch 21, **dadurch gekennzeichnet, dass** die zwei Arme des U-förmigen Rohres an inneren, jeweils gegenüberliegenden Flächen des Strangprofils anliegen.

23. Vorrichtung gemäss Anspruch 22, **dadurch gekennzeichnet, dass** die inneren Flächen an die Form des U-förmigen Rohres angepasst sind, um eine erhöhte Wärmeleitung auf das Rohr zu erreichen.

24. Vorrichtung gemäss einem der vorhergehenden Ansprüche, **dadurch gekennzeichnet, dass** das Strangprofil an einer Aussenseite Kühlrippen aufweist.

25. Vorrichtung gemäss einem der vorhergehenden Ansprüche, **dadurch gekennzeichnet, dass** das Strangprofil ein Nuten bzw. eine Befestigungseinrichtung zur Befestigung einer Kalibriereinheit aufweist.

26. Messanordnung, bestehend aus einer Vorrichtung zur Emission von Licht gemäss einem der vorhergehenden Ansprüche und einer oder mehreren Kameras (3), insbesondere Zeilenkameras, wobei sowohl die Emissionsvorrichtung als auch die Kamera bzw. die Kameras (3) auf eine Messebene ausgerichtet sind.

27. System zur Erfassung der Bahnkanten oder Bahnbreiten bzw. zur Detektierung von Fehlern und/oder Unregelmässigkeiten auf einer Materialbahn (2), die entlang einer Messebene vorbeigeführt wird, **dadurch gekennzeichnet, dass** das System eine Messanordnung gemäss Anspruch 26 und eine Auswerteeinheit zur Analyse der Daten von der Kamera bzw. von den Kameras (3), um Fehler und/oder Unregelmässigkeiten festzustellen.

## Claims

1. An apparatus for emitting light, comprising:
one or more linearly arranged devices (5) for radiating light and one or more optical components (10, 12, 12', 13) arranged in a carrier structure,
wherein the carrier structure includes an extruded profile (4) in which the devices (5) for radiating light and the one or more optical components (10, 12, 12', 13) are arranged,
the extruded profile (4) is hollow and comprises an exit aperture (6) for the exit of the light from the extruded profile (4),
**characterized in that**
the extruded profile is configured such that in the region of the exit aperture (6) of the extruded profile selectively at the same position either an optical plate (12, 12') or a rod lens (13) can be arranged.

2. The apparatus according to claim 1, **characterized in that** in the region of the exit aperture (6) of the extruded profile circular-segment-shaped surfaces (14) for receiving a rod lens (13) are disposed, which are interrupted by slots (15) so that they can alternatively receive an optical plate (12, 12').

3. The apparatus according to one of the preceding claims, **characterized in that** the extruded profile (4) is configured as one piece.

4. The apparatus according to one of the preceding claims, **characterized in that** the extruded profile comprises slots (7, 7', 7", 11, 15) into which the devices (5) for radiating light and the one or more optical components (10, 12, 12', 13) can be inserted in order to arrange them inside the extruded profile.

5. The apparatus according to one of the preceding claims, **characterized in that** the extruded profile (4) is configured such that the devices (5) for radiating light can be arranged inside the extruded profile at at least two positions in a cross-sectional plane of the extruded profile.

6. The apparatus according to claim 5, **characterized in that** slots (7', 7") are arranged inside the extruded profile so as to be able to arrange the devices for radiating light at at least two different distances from the light exit aperture (6) of the extruded profile.

7. The apparatus according to claim 5 or 6, **characterized in that** the slots (7, 7', 7") are arranged inside the extruded profile so as to be able to arrange the devices for radiating light in at least two different angular positions relative to the main radiation direction (9) of the light from the extruded profile.

8. The apparatus according to claim 7, **characterized in that** the slots (7, 7', 7") for the different angular positions are arranged in the extruded profile such that the main radiation direction of the devices for radiating light can be at 0° or 90° to the main radiation direction of the light from the extruded profile.

9. The apparatus according to one of the preceding claims, **characterized in that** slots (11) or fastening means are provided in the extruded profile (4) in order to arrange a mirror plate, a scattering mirror plate (10) or a reflective matte glass plate such that light emitted by the devices for radiating light is reflected in such a way that the main radiation direction (8) of the devices for radiating light coincides with the main radiation direction (9) of the light from the extruded profile.

10. The apparatus according to one of the preceding claims, **characterized in that** along the optical path of the light after the devices (5) for radiating light but at a distance from the exit aperture (6) of the light from the extruded profile a scattering mirror plate (10) or a reflective matte glass plate is arranged that scatteringly reflects the bulk of the incident light in a relatively small angular region around the emergent angle of reflection.

11. The apparatus according to claim 10, **characterized in that** the scattering mirror plate (10) or the reflective matte glass plate is a plate with an aluminum-bronze coating, a plate with a matte surface, a plate with a coating of matte barite or a plate with a beaded screen coating.

12. The apparatus according to one of the preceding claims, **characterized in that** a clear optical disk (12'), a translucent matte disk (12) or a diffuser or rod lens (13) is arranged in the region of the exit aperture (6) of the light from the extruded profile.

13. The apparatus according to one of the preceding claims, **characterized in that** the devices for radiating light each comprise a circuit board (17), on which preferably electro-optical elements or LEDs (16) are linearly arranged.

14. The apparatus according to claim 13, **characterized in that** the circuit boards for the devices for radiating light are constructed in modular fashion such that the overall length of the light-radiating devices depends on the number and respective lengths of the serially assembled circuit boards (17).

15. The apparatus according to claim 13 or 14, **characterized in that** the light-radiating devices comprise plug connectors at the respective adjacent edges, so that all the light-radiating devices can be supplied with current and/or controlled via connecting lines from one side of the extruded profile.

16. The apparatus according to one of the preceding claims, **characterized in that** the light-radiating devices are interrupted by an interposed insert that is connected via plug connectors to the adjacent light-radiating devices, so that all the light-radiating devices can be supplied with current and/or controlled via connecting lines from one side of the extruded profile.

17. The apparatus according to one of the preceding claims, **characterized in that** in the case of the light-radiating devices arranged at the edge of the extruded profile, the interspacing of the electro-optical elements or the LEDs (16) becomes continuously smaller toward the edge in order to obtain uniform illumination in the edge regions as well.

18. The apparatus according to one of the preceding claims, **characterized in that** the light-radiating devices, that are arranged at the edge of the extruded profile, can be controlled by a control unit such that the electro-optical elements or the LEDs (16) yield a higher light output towards the edge in order to obtain uniform illumination in the edge regions as well.

19. The apparatus according to one of the preceding claims, **characterized in that** one or more inner conduits (18, 18') are provided in the extruded profile so that a coolant for dissipating heat can be routed therethrough.

20. The apparatus according to claim 19, **characterized in that** at least two inner conduits (18, 18') are provided, which are connected to each other at one end of the extruded profile by an end piece, so that a first inner conduit (18) can be used as a supply line and a second inner conduit (18') as a discharge line for the coolant.

21. The apparatus according to one of the preceding claims, **characterized in that** an elongated pipe bent into a U-shape at one end is disposed inside the extruded profile so that a coolant for dissipating heat can be routed therethrough.

22. The apparatus according to claim 21, **characterized in that** the two arms of the U-shaped pipe rest against inner, mutually confronting surfaces of the extruded profile.

23. The apparatus according to claim 22, **characterized in that** the inner surfaces are adapted to the shape of the U-shaped pipe to bring about increased heat conduction to the pipe.

24. The apparatus according to one of the preceding claims, **characterized in that** the extruded profile comprises cooling fins on an outer side.

25. The apparatus according to one of the preceding claims, **characterized in that** the extruded profile comprises a slot or a fastening device for securing a calibration unit.

26. A measuring arrangement, comprising an apparatus for emitting light according to one of the preceding claims and one or more cameras (3), in particular line scanning cameras, wherein both the emission apparatus and the one or more cameras (3) are oriented towards a measurement plane.

27. A system for monitoring the web edges or web widths or for detecting defects and/or irregularities on a web of material (2) being conveyed along a measurement plane, **characterized in that**
the system a measuring arrangement according to claim 26 and an evaluation unit for analyzing the data from the one or more cameras (3), in order to pinpoint defects and/or irregularities.

## Revendications

1. Dispositif destiné à l'émission de lumière, qui présente un ou plusieurs équipements (5) disposés de manière linéaire pour l'émission de lumière et un ou plusieurs composants optiques (10, 12, 12', 13), qui sont disposés dans une structure support,
la structure support comprenant un profilé (4), dans lequel sont disposés les équipements (5) d'émission de lumière et le composant optique et/ou les composants optiques (10, 12, 12', 13),
le profilé (4) étant creux et présentant une ouverture de sortie (6) pour la sortie de la lumière du profilé (4), **caractérisé en ce**
**que** le profilé est réalisé de telle sorte que soit une plaque optique (12, 12') soit une lentille tige (13) peut être disposée dans la zone de l'ouverture de sortie (6) du profilé au choix à la même position.

2. Dispositif selon la revendication 1, **caractérisé en ce que** des surfaces (14) de type segment de cercle servant à recevoir une lentille tige (13), qui sont interrompues par des rainures (15) pour pouvoir recevoir en variante une plaque optique (12, 12'), se trouvent dans la zone de l'ouverture de sortie (6) du profilé.

3. Dispositif selon l'une quelconque des revendications précédentes, **caractérisé en ce que** le profilé (4) est réalisé d'un seul tenant.

4. Dispositif selon l'une quelconque des revendications précédentes, **caractérisé en ce que** le profilé présente des rainures (7, 7', 7", 11, 15), dans lesquelles les équipements (5) d'émission de lumière et le composant optique ou les composants optiques (10, 12, 12', 13) peuvent être insérés pour les agencer à l'intérieur du profilé.

5. Dispositif selon l'une quelconque des revendications précédentes, **caractérisé en ce que** le profilé (4) est configuré de telle sorte que les équipements (5) d'émission de lumière peuvent être disposés à l'intérieur du profilé à au moins deux positions dans un plan de section transversale du profilé.

6. Dispositif selon la revendication 5, **caractérisé en ce que** des rainures (7', 7") sont disposées à l'intérieur du profilé pour pouvoir agencer les équipements d'émission de lumière à au moins deux distances différentes par rapport à l'ouverture de sortie de lumière (6) du profilé.

7. Dispositif selon la revendication 5 ou 6, **caractérisé en ce que** des rainures (7, 7', 7") sont disposées à l'intérieur du profilé pour pouvoir agencer les équipements d'émission de lumière à au moins deux positions angulaires différentes par rapport au sens d'émission principal (9) de la lumière hors du profilé.

8. Dispositif selon la revendication 7, **caractérisé en ce que** les rainures (7, 7', 7") sont disposées pour les différentes positions angulaires dans le profilé de telle sorte que le sens d'émission principal des équipements d'émission de lumière peut être au choix de 0° ou 90° par rapport au sens d'émission principal de la lumière hors du profilé.

9. Dispositif selon l'une quelconque des revendications précédentes, **caractérisé en ce que** des rainures (11) ou des moyens de fixation sont prévus dans le profilé (4) pour agencer une plaque miroir, une plaque miroir de diffusion (10) ou une plaque dépolie réfléchissante de telle sorte que la lumière émise par les équipements d'émission de lumière est réfléchie de telle manière que le sens d'émission principal (8) des équipements d'émission de lumière coïncide avec le sens d'émission principal (9) de la lumière hors du profilé.

10. Dispositif selon l'une quelconque des revendications précédentes, **caractérisé en ce que** le long du chemin optique de la lumière en aval des équipements (5) d'émission de lumière mais à distance de l'ouverture de sortie (6) de la lumière hors du profilé est disposée une plaque miroir de diffusion (10) ou une plaque dépolie réfléchissante laquelle réfléchit la majeure partie de la lumière incidente par diffusion dans une plage angulaire relativement petite autour de l'angle de réflexion.

11. Dispositif selon la revendication 10, **caractérisé en ce que** la plaque miroir de diffusion (10) ou la plaque dépolie réfléchissante est une plaque avec un revêtement aluminium bronze, une plaque avec une surface matte, une plaque avec un revêtement en baryte matte ou une plaque avec un revêtement perlé.

12. Dispositif selon l'une quelconque des revendications précédentes, **caractérisé en ce qu'**une plaque optique claire (12'), un dépoli perméable à la lumière (12) ou bien un diffuseur ou une lentille tige (13) est disposé dans la zone de l'ouverture de sortie (6) de la lumière hors du profilé.

13. Dispositif selon l'une quelconque des revendications précédentes, **caractérisé en ce que** les équipements d'émission de lumière comprennent respectivement une plaque (17), sur laquelle sont disposés de manière linéaire de préférence des éléments électro-optiques ou des DEL (16).

14. Dispositif selon la revendication 13, **caractérisé en ce que** les plaques pour les équipements d'émission de lumière sont construites de manière modulaire de telle sorte que la longueur totale des équipements d'émission de lumière dépend du nombre et de la longueur respective des plaques (17) contiguës.

15. Dispositif selon la revendication 13 ou 14, **caractérisé en ce que** les équipements d'émission de lumière présentent des connexions enfichables au niveau des arêtes respectivement adjacentes pour pouvoir alimenter en courant l'ensemble des équipements d'émission de lumière depuis un côté du profilé et/ou pouvoir les commander par le biais de lignes de connexion.

16. Dispositif selon l'une quelconque des revendications précédentes, **caractérisé en ce que** les équipements d'émission de lumière sont interrompus par un élément d'insertion intermédiaire, qui est relié aux équipements d'émission de lumière adjacents par le biais de connexions enfichables pour pouvoir alimenter en courant l'ensemble des équipements d'émission de lumière depuis un côté du profilé et/ou pouvoir les commander par le biais de lignes de connexion.

17. Dispositif selon l'une quelconque des revendications précédentes, **caractérisé en ce que** sur les équipements d'émission de lumière, qui sont disposés sur le bord du profilé, la distance entre les éléments électro-optiques ou les DEL (16) et le bord diminue continuellement pour atteindre un éclairage homogène même dans les zones de bord.

18. Dispositif selon l'une quelconque des revendications précédentes, **caractérisé en ce que** les équipements d'émission de lumière, qui sont disposés sur le bord du profilé, peuvent être commandés par un dispositif de commande de telle sorte que les éléments électro-optiques ou les DEL (16) dégagent un plus grand rendement lumineux vers le bord pour atteindre un éclairage homogène même dans les zones de bord.

19. Dispositif selon l'une quelconque des revendications précédentes, **caractérisé en ce qu'**un ou plusieurs canaux intérieurs (18, 18') sont prévus dans le profilé pour pouvoir y faire passer un liquide de refroidissement pour l'évacuation de la chaleur.

20. Dispositif selon la revendication 19, **caractérisé en ce qu'**au moins deux canaux intérieurs (18, 18') sont prévus, qui sont en relation à une extrémité du profilé par un embout, de sorte qu'un premier canal intérieur (18) peut être utilisé comme conduite d'amenée et un deuxième canal intérieur (18') comme conduite d'évacuation du liquide de refroidissement.

21. Dispositif selon l'une quelconque des revendications précédentes, **caractérisé en ce qu'**un tube allongé, coudé en forme de U à une extrémité est inséré à l'intérieur du profilé pour pouvoir y faire passer un liquide de refroidissement pour l'évacuation de la chaleur.

22. Dispositif selon la revendication 21, **caractérisé en ce que** les deux bras du tube en forme de U s'appuient contre les surfaces intérieures, respectivement opposées du profilé.

23. Dispositif selon la revendication 22, **caractérisé en ce que** les surfaces intérieures sont adaptées à la forme du tube en forme de U pour atteindre une conduction thermique accrue sur le tube.

24. Dispositif selon l'une quelconque des revendications précédentes, **caractérisé en ce que** le profilé présente des ailettes de refroidissement sur un côté extérieur.

25. Dispositif selon l'une quelconque des revendications précédentes, **caractérisé en ce que** le profilé filé présente une rainure ou un dispositif de fixation pour la fixation d'une unité de calibrage.

26. Ensemble de mesure, composé d'un dispositif destiné à l'émission de lumière selon l'une quelconque des revendications précédentes et d'une ou de plusieurs caméras (3) en particulier des caméras de balayage de ligne, aussi bien le dispositif d'émission que la caméra ou les caméras (3) étant dirigés sur un plan de mesure.

27. Système de détection des arêtes de bande ou largeurs de bande ou de détection de défauts et/ou d'irrégularités sur une bande de matériau (2) qui est conduite le long d'un plan de mesure, **caractérisé en ce que** le système présente un ensemble de mesure selon la revendication 26 et une unité d'évaluation pour l'analyse des données de la caméra ou des caméras (3) pour détecter les défauts et/ou les irrégularités.
